# EUROPÄISCHE PATENTSCHRIFT

(11) **EP 0 379 179 B1**
(45) Veröffentlichungstag und Bekanntmachung des Hinweises auf die Patenterteilung: **16.06.1993**
(21) Anmeldenummer: 90100936.5
(22) Anmeldetag: 17.01.1990
(51) Int. Cl.: B60K 11/04

(54) **Wärmetauscherbefestigung für Brennkraftmaschinen**
Heat exchanger attachment to combustion engines
Fixation d'un échangeur pour moteur à explosions

(30) Priorität: 17.01.1989 DE 3901193
(43) Veröffentlichungstag der Anmeldung: 25.07.1990
(73) Patentinhaber: Bayerische Motoren Werke Aktiengesellschaft, 80788 München (DE)
(72) Erfinder: Brielmair, Martin, D-8058 Erding (DE)

(56) Entgegenhaltungen:
- DE-C- 3 545 141

## Beschreibung

Die Erfindung bezieht sich auf eine Vorrichtung der im Oberbegriff des ersten Anspruchs angegebenen Art.

Aus der DE-PS 35 45 141 ist eine gattungsgemäße Wärmetauscherbefestigung bekannt. Diese Befestigung besteht aus Kunststoff und bildet eine Schnappverriegelung zum Befestigen eines Kühlers an der Karosserie eines Kraftfahrzeuges. Diese Befestigung hat sich hervorragend bewährt. Sie hat jedoch den Nachteil, daß sie eine besonders ausgestaltete spezielle karosserieseitige Befestigungsfläche verlangt.

Aufgabe der Erfindung ist es, eine gattungsgemäße Wärmetauscherbefestigung derart weiterzubilden, daß sie auch an abgewinkelten Karosserieblechen ohne weiteres verwendet werden kann. Diese Aufgabe wird erfindungsgemäß durch die kennzeichnenden Merkmale des ersten Anspruchs gelöst. Aufgrund der Anordnung der karosserieseitigen Abstützflächen mit einem Teil der Verzahnung auf der einen und die übrigen Befestigungselemente auf der anderen Seite des Filmscharniers können aufgrund des Scharniers Lagetoleranzen zwischen Karosserie und Wärmetauscher leichter ausgeglichen werden als bei der gattungsbildenden Anordnung. Darüber hinaus werden an die karosserieseitigen Anlageflächen geringere Genauigkeitstoleranzen gestellt. Der weitere Vorteil der erfindungsgemäßen Ausbildung besteht darin, daß eine einfache Montage ohne Werkzeug möglich ist und daß die Konsole aus Kunststoff in Spritzguß gefertigt werden kann, sie also einfach herzustellen ist. Auch kann die Konsole aufgrund ihrer Ausbildung bei der Demontage des Wärmetauschers an der Karosserie verbleiben. Dadurch, daß keinerlei Bohrungen oder besonders gestaltete Abstützflächen an der karosserieseitigen Abstützung notwendig sind, sind die erfindungsgemäß aufgebauten Konsolen stufenlos verschiebbar, sie lassen sich deshalb jeder Kühlerbreite anpassen.

Vorteilhafte Weiterbildungen der Erfindung sind in den Unteransprüchen beschrieben.

Im folgenden wird anhand eines Ausführungsbeispiels die erfindungsgemäße Ausgestaltung näher beschrieben. Es stellen dar:
- Fig. 1: eine Seitenansicht einer Wasserkühlerbefestigung an einem Kraftfahrzeug;
- Fig. 2: die erfindungsgemäß aufgebaute Konsole im ausgeklappten Zustand;
- Fig. 3: einen Längsschnitt durch die erfindungsgemäß aufgebaute Konsole;
- Fig. 4: eine Draufsicht auf die erfindungsgemäß aufgebaute Konsole.

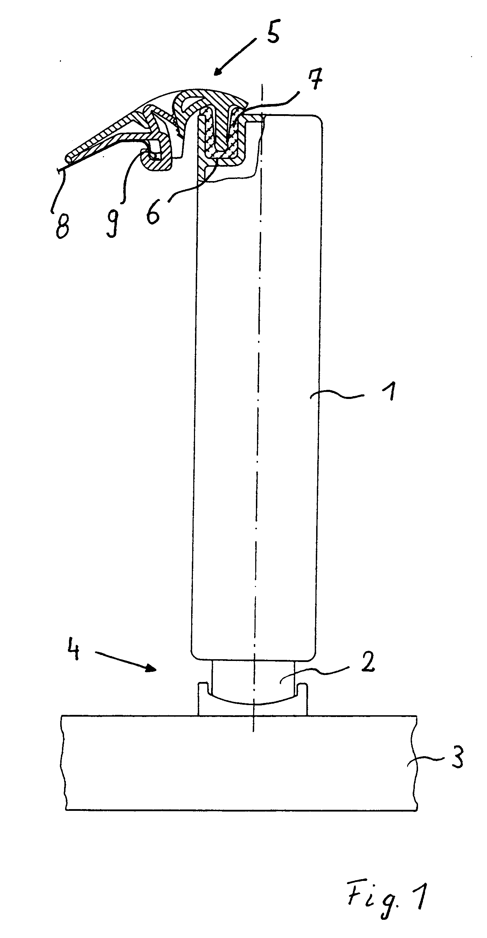

In Fig. 1 ist ein Kühler 1 einer nicht näher dargestellten Brennkraftmaschine in Seitenansicht gezeigt. Er wird über Gummilager 2 an einem nur abschnittsweise dargestellten Motorträger 3 abgestützt. Die Gummilager 2 bilden die untere Kühlerabstützstelle 4.

Oben wird der Kühler über die Konsole 5 gehalten. Hierzu weist der Kühler, bevorzugt im Bereich seiner Wasserkästen, je eine nach oben offene Aussparung 6 auf, in die ein elastisches Lagerelement 7 eingesetzt wird. In dieses elastische Lagerelement 7 greift die Konsole 5 mit ihrem vorderen Ende ein. Ihr rückwärtiges Ende liegt auf dem oberen Verbindungsträger (Querträger) 8 auf und umgreift dessen freie abgewinkelte Kante 9, die zum Kühler 1 hinweist.

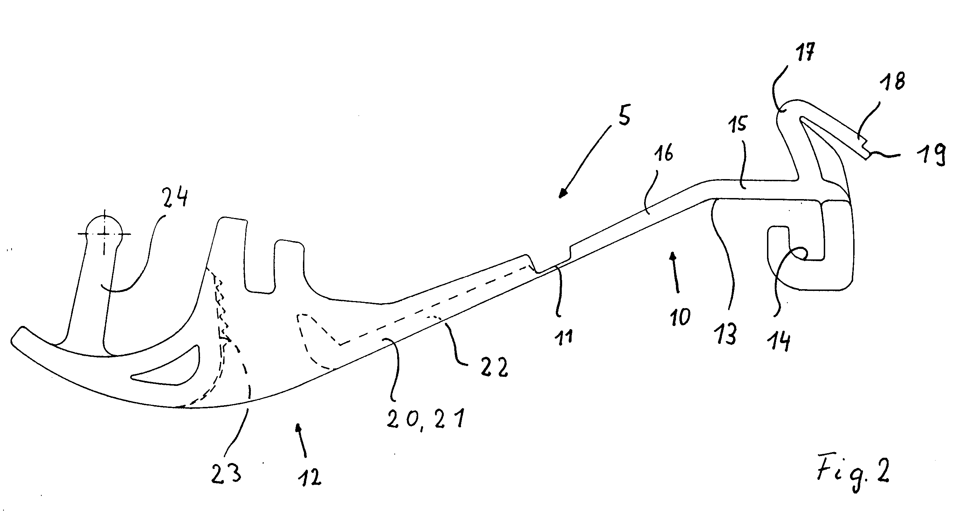

In Fig. 2 ist die Konsole 5 näher dargestellt. In dieser Figur ist die Konsole 5 im ausgeklappten Zustand dargestellt. Sie besteht aus der ersten Seite 10 und der mit dieser über das Filmscharnier 11 verbundenen Seite 12. Die erste Seite 10 weist die beiden karosserieseitigen Abstützstellen 13 und 14 auf. Die erste karosserieseitige Abstützstelle 13 besteht aus den abgewinkelten Stützarmteiten 15 und 16, die einen stumpfen Winkel miteinander bilden. Hierbei ist der Stützarmteil 16 dem Filmscharnier 11 benachbart angeordnet. Der Stützarmteil 15 schließt sich an dem Stützarmteil 16 an und geht über in die hakenförmige Abstützstelle 14. Die Form des Hakens ist der freien Kante 9 des Verbindungsträgers 8 angepaßt.

An dem zweiten Stützarmteil 15 zweigt einstückig der Schnapphaken 17 ab, der an seinem vorderen freien Ende 18 ein Zahnprofil 19 trägt.

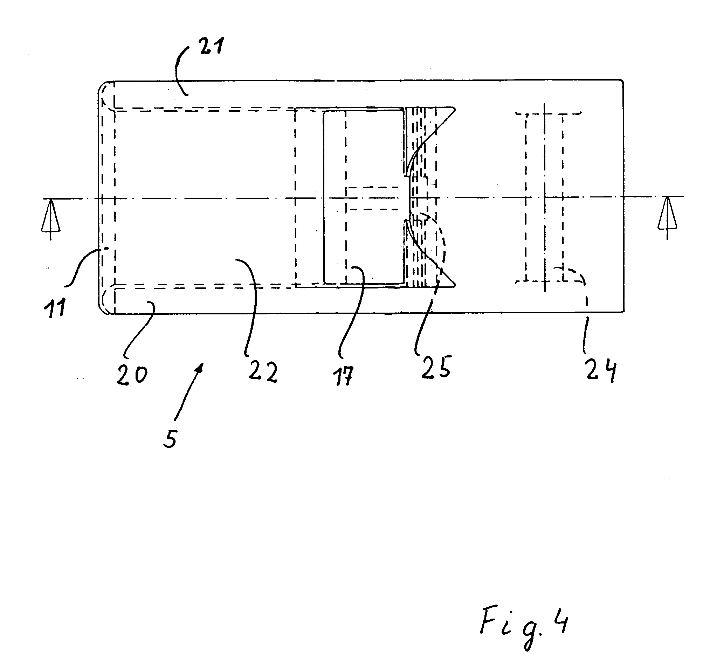

Die zweite Seite 12 besteht aus zwei parallel verlaufenden Armen 20 und 21 (Fig. 4). Innerhalb der Arme ist - strichliniert gezeichnet - der Gegenhalter 22 angeordnet.

Die beiden Arme 20 und 21 gehen dann über in die Verzahnung 23 und den Fortsatz 24. Sowohl die Verzahnung 23 als auch der Fortsatz 24 weisen in die gleiche Richtung wie der Schnapphaken 17 sowie die Drehrichtung des Filmscharniers 11.

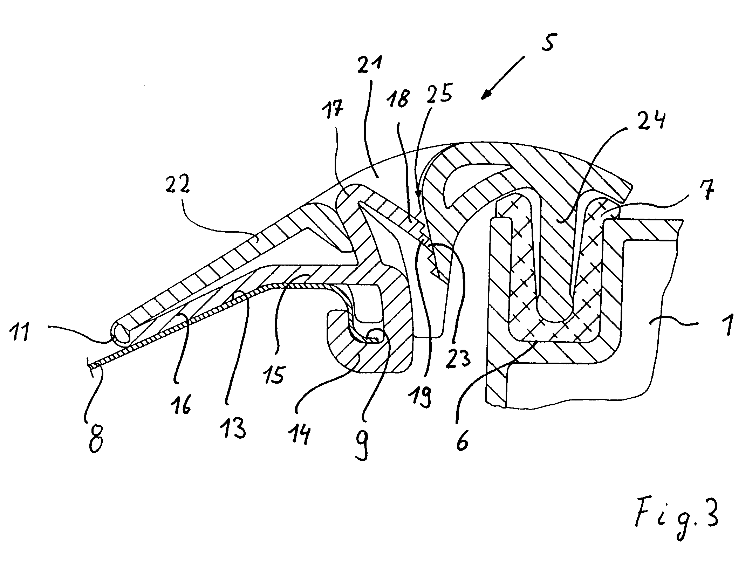

In Fig. 3 ist ein Querschnitt durch die Konsole 5 im eingebauten Zustand dargestellt. Hierbei ist sichtbar, wie die hakenförmige Abstützstelle 14 die freie Kante 9 des Verbindungsträgers 8 umgreift. Ebenso ist dort dargestellt, wie die Stützarmeteil 15, 16 an den Flächen des Verbindungsträgers anliegen.

Der Fortsatz 24 greift über das Lagerelement 7 in die Aussparung 6 des Kühlers 1 ein. Gleichzeitig greift der Schnapphaken 17 in die Verzahnung 23 ein. Der Gegenhalter 22 stützt den Schnapphaken im Sinne der Verriegelung der Verzahnung.

Bei der Montage der Konsole 5 wird folgendermaßen vorgegangen.
Die Konsole 5 nach Fig. 2 wird im offenen Zustand über den Verbindungsträger 8 gelegt, so daß da die hakenförmige Abstützstelle die freie Kante 9 umgreifen kann. Aufgrund des stumpfen Winkels zwischen den beiden Stützarmteil 15 und 16 und der Tatsache, daß die Konsole noch geöffnet ist, bleibt diese an dem Verbindungsträger haften. In dieser Lage ist die Konsole 5 auf dem Verbindungsträger 8 längsverschiebbar. Eine genaue Ausrichtung auf den noch zu montierenden Kühler 1 ist deshalb nicht notwendig.

Anschließend wird der Kühler 1 in die untere Kühlerabstützstelle 4 eingesteckt. Sodann wird die Konsole 5 und hier insbesondere die zweite Seite 12 über das Filmscharnier in Richtung auf den Kühler geklappt. Dadurch kommt der Fortsatz 24 mit dem Lagerelement 7 in der Aussparung 6 des Kühlers in Eingriff und gleichzeitig schnappt der Schnapphaken 17 mit seinem Zahnprofil 19 in die Verzahnung 23 ein. Der Gegenhalter 22 drückt den Schnapphaken gegen die Verzahnung, so daß ein selbsttätiges Öffnen der Verzahnung nicht möglich ist. Da die Verzahnung 23 im Schwenkbereich mit ihrem Drehpunkt im Filmscharnier 11 mit mehreren Zähnen ausgeführt ist, kann dadurch eine Toleranz zwischen dem Kühler 1 und der Karosserie von einigen Millimetern ausgeglichen werden. Die Zahnwinkel des Zahnprofils 19 bzw. der Verzahnung 23 sowie die Krümmung des Schnapphakens 17 sind so ausgelegt, daß bei einer Belastung der Schnappverbindung eine Selbstsperrung erfolgt. Unterstützt wird diese Selbstsperrung durch den Gegenhalter 22.

Zum Öffnen der Konsole 5 ist in der Mitte der Verzahnung 23 diese unterbrochen. Es wird so eine Aussparung 25 gebildet (Fig. 4). In diese Aussparung 25 kann ein Schraubendreher oder ein anderer spitzer Gegenstand eingesteckt werden. Dadurch wird der Schnapphaken zurückgebogen, womit die zweite Seite 12 der Konsole 1 um das Filmscharnier 11 zurückgedreht werden kann. Dadurch kommt der Fortsatz 24 aus dem Lagerelement 8 hervor. Somit ist der Kühler 1 freigegeben.

In Fig. 4 ist eine Draufsicht auf die Konsole 5 dargestellt. Hierbei sieht man die Anordnung der Arme 20 und 21 sowie die Anordnung und Ausbildung des Gegenhalters 22.

## Patentansprüche

1. Wärmetauscherbefestigung für Brennkraftmaschinen, insbesondere Kühler (1) in Kraftfahrzeugen, bestehend aus einer Konsole (5) mit einem Lagerelement (7) zwischen der Konsole (5) und dem Wärmetauscher, indem in das Lagerelement (7) ein Fortsatz (24) der Konsole (5) eingreift und die Konsole (5) zwei karosserieseitige Abstützstellen (13, 14) aufweist, wobei die erste Abstützstelle (13) aus zwei flächenhaften Stützarmteilen (15, 16) besteht, die sich an einer karosserieseitigen Stützfläche abstützen und die zweite Abstützstelle (14) aus einer hakenförmigen Abstützstelle (14) zum Hintergreifen einer karosserieseitigen Begrenzungskante und mit einer Verzahnung (23) zum Einstellen der von dem Fortsatz (24) auf den Wärmetauscher ausgeübten Vorspannung, dadurch gekennzeichnet, daß die Konsole (5) über ein Filmscharnier (11) zweigeteilt ist, wobei die beiden Stützarmteile (15, 16) auf der einen und die Verzahnung (23) sowie der Fortsatz (24) auf der anderen Seite des Filmscharniers (11) angeordnet sind.

2. Wärmetauscherbefestigung nach Anspruch 1,
dadurch gekennzeichnet, daß in etwa parallel zu dem Fortsatz (24) verlaufend ein weiterer Stützarm vorgesehen ist, der die Verzahnung (23) trägt.

3. Wärmetauscherbefestigung nach Anspruch 1 oder 2,
dadurch gekennzeichnet, daß ein mit der Verzahnung (23) zusammenwirkender Schnapphaken (17) in der rückwärtigen Verlängerung des hakenförmigen Stützarmes (14) vorgesehen ist.

4. Wärmetauscherbefestigung nach einem der vorangegangenen Ansprüche,
dadurch gekennzeichnet, daß der Schnapphaken (17) sich auf seiner Rückseite an einem Gegenhalter (22) abstützt, der an der den Fortsatz (24) bildenden Seite (12) der Konsole (5) angeordnet ist.

5. Wärmetauscherbefestigung nach einem der vorangegangenen Ansprüche,
dadurch gekennzeichnet, daß zwischen dem Schnapphaken (17) und der Verzahnung (23) eine die Verzahnungswirkung unterbrechende Ausnehmung (25) vorgesehen ist.

6. Wärmetauscherbefestigung nach einem der vorangegangenen Ansprüche,
dadurch gekennzeichnet, daß der Gegenhalter (22) seitlich von je einem Arm (20,21) begrenzt ist, die einerseits vom Filmscharnier (11) ausgehen und andererseits in die Verzahnung (23) sowie den Fortsatz (24) übergehen.

## Claims

1. A heat exchanger attachment for combustion engines, especially for heat exchangers (1) in motor vehicles, comprising a bracket (5) with a bearing element (7) between the bracket (5) and the heat exchanger, wherein the bearing element (7) engages in an extension (24) of the bracket (5) and the bracket (5) is provided with two supporting points (13, 14) on the vehicle body side, and wherein the first supporting point (13) comprises two support sections (15, 16) extending over an area and supported by a supporting surface on the vehicle body and the second supporting point (14) comprises a hook-shaped supporting point which engages from behind on a boundary edge and is provided with a toothing (23) for adjustment of the prestress exerted by the extension (24) on the heat exchanger, characterised in that the bracket (5) is divided into two sections by a film hinge (11) with both support sections (15, 16) arranged on one side of the film hinge (11) and the toothing (23) and extension (24) arranged on the other side of the film hinge.

2. A heat exchanger attachment according to Claim 1, characterised in that a further support is provided which extends approximately parallel to the extension (24) and bears the toothing (23).

3. A heat exchanger attachment according to Claim 1 or 2, characterised in that a snap hook (17) working in conjunction with the toothing (23) is provided on the rear extension of the hook-shaped support (14).

4. A heat exchanger attachment according to any one of the preceding Claims, characterised in that the snap hook (17) is supported on its rear surface through a mating support (22) arranged on that side (12) of the bracket (5) which forms an extension (24).

5. A heat exchanger attachment according to any one of the preceding Claims, characterised in that a recess (25) which disrupts the toothing effect is arranged between the snap hook (17) and the toothing (23).

6. A heat exchanger attachment according to any one of the preceding Claims, characterised in that mating support (22) is bounded by arms (20, 21) on each side which stem on the one side from the film hinge (11) and on the other side form the toothing (23) and the extension (24).

## Revendications

1. Fixation d'échangeur de chaleur pour moteurs à combustion interne, en particulier pour radiateurs, consistant en une console (5) avec un élément d'appui (7) entre la console (5) et l'échangeur de chaleur, dans laquelle un prolongement (24) de la console vient en prise dans l'élément d'appui (7) et la console (5) présente deux emplacements d'appui (13, 14) situés du côté de la carrosserie, le premier élément d'appui (13) consistant en deux parties (15, 16) de bras d'appui, qui s'appuient sur une surface d'appui située du côté de la carrosserie et le deuxième emplacement d'appui (14) consiste en un emplacement d'appui (14) en forme de crochet servant à saisir par derrière un bord situé du côté de la carrosserie et à coopérer avec une denture (23) pour régler la tension exercée par le prolongement (24) sur l'échangeur de chaleur, fixation d'échangeur de chaleur caractérisée en ce que la console (5) est divisée en deux parties au moyen d'une charnière à film (11), les deux parties de bras d'appui (15, 16) étant disposées sur l'un des côtés de la charnière à film (11) et la denture (23) ainsi que le prolongement (24) étant disposés sur l'autre côté de la charnière à film (11).

2. Fixation d'échangeur de chaleur selon la revendication 1, caractérisée en ce que l'on prévoit un autre bras d'appui s'étendant à peu près parallèlement au prolongement (24), bras qui porte la denture (23).

3. Fixation d'échangeur de chaleur selon la revendication 1 ou 2, caractérisée en ce qu'un crochet à déclic (17) coopérant avec la denture (23) est prévu dans le prolongement postérieur du bras d'appui (14) en forme de crochet.

4. Fixation d'échangeur de chaleur selon l'une des revendications précédentes, caractérisé en ce que le crochet à déclic (17) s'appuie par son côté postérieur sur un contre-support (22) qui est disposé sur le côté (12) formant le prolongement (24).

5. Fixation d'échangeur de chaleur selon l'une des revendications précédentes, caractérisée en ce qu'entre le crochet à déclic (17) et la denture (23) il est prévu un évidement (25) interrompant l'action de la denture.

6. Fixation d'échangeur de chaleur selon l'une des revendications précédentes, caractérisée en ce que le contre-support (22) est délimité latéralement par un bras (20, 21) qui, d'une part, sort de la charnière à film (11) et, d'autre part, se transforme en la denture (23) ainsi que le prolongement (24).
